**Europäisches Patentamt**

**European Patent Office**

**Office européen des brevets**

(19)

(11) Veröffentlichungsnummer: **0 170 229**
**A2**

(12) # EUROPÄISCHE PATENTANMELDUNG

(21) Anmeldenummer: **85109436.7**

(22) Anmeldetag: **26.07.85**

(51) Int. Cl.⁴: **B 32 B 3/28**
**B 32 B 5/20, B 65 D 81/06**

(30) Priorität: **02.08.84 DE 3428471**

(43) Veröffentlichungstag der Anmeldung:
**05.02.86 Patentblatt 86/6**

(84) Benannte Vertragsstaaten:
**AT BE CH FR GB IT LI LU NL SE**

(71) Anmelder: **Erwin Behn Verpackungsbedarf GmbH**
**Diessemer Strasse 59-71**
**D-4150 Krefeld(DE)**

(72) Erfinder: **Wenzl, Heinz, Dr.**
**Uhlandstrasse 8a**
**D-8755 Albstadt(DE)**

(72) Erfinder: **Schäuble, Annette, Dr.**
**Heinrich-von-Stephan-Strasse 7**
**D-6053 Obertshausen(DE)**

(72) Erfinder: **Frische, Rainer, Dr.**
**Schüttenhelmweg 60**
**D-6000 Frankfurt am Main(DE)**

(72) Erfinder: **Gudjons, Jürgen, Dr.**
**Karl-Ulrich-Strasse 9**
**D-6360 Friedberg(DE)**

(72) Erfinder: **Wollmann, Klaus**
**Bahnhofstrasse 33**
**D-6250 Limburg - Eschhofen(DE)**

(74) Vertreter: **Rupprecht, Klaus, Dipl.-Ing.**
**Am Römerhof 35**
**D-6000 Frankfurt (Main) 90(DE)**

(54) Folienverbund.

(57) Folienverbund, bestehend aus mindestens zwei beabstandeten Folien, die an mehreren Stellen zur Ausbildung von Kammern miteinander verbunden sind. In den Kammern sind chemische Stoffe enthalten, die durch äußere Einwirkung eine chemische Reaktion ergeben, die zu einer Vergrößerung des Volumens der Kammern führt.

FIG. 1

EP 0 170 229 A2

Beschreibung

Die Erfindung bezieht sich auf einen Folienverbund bestehend aus mindestens zwei, mindestens teilweise beabstandeten Folien, die an mehreren Stellen zur Bildung von Kammern miteinander verbunden sind, wobei zumindest in einem Teil der Kammern chemische Stoffe angeordnet sind.

Stoßempfindliche Güter müssen für den Transport in stoßdämpfenden und leichten Stoffen verpackt werden. Für diesen Zweck sind z.B. geschäumte Kunststoffe wie Polystyrol, Polyurethan, Holz- oder Glaswolle, Wellpappe usw. geeignet. Kunststoffschäume werden im allgemeinen aus Thermoplasten und Treibmitteln durch Erwärmung hergestellt. Auf diese Weise wird z.B. aus Polystyrol und Freon ein Polystyrolschaum erhalten. Es ist z.B. zur Herstellung von Polyurethanschaum auch bekannt, zwei Stoffe miteinander zu vermischen, die dann unter Gasentwicklung aufschäumen. Stoffe können auch in Formwerkzeugen aufgeschäumt werden, um kompliziert geformte Teile für Verpackungszwecke zu erhalten. Ferner können zwei Materialkomponenten in einer Spritzpistole vermischt und während der Ausgabe aufgeschäumt werden. Mit all diesen Methoden ist ein Eindringen des Schaums in schwer zugängliche Stellen des Verpackungsgutes nicht immer gewährleistet.

Für Verpackungszwecke sind Luftpolsterfolien bekannt, die aus einer ersten glatten Kunststoffolie und einer zweiten mit noppenartigen Vertiefungen versehenen Kunststoffolie bestehen, wobei die beiden Folien derart miteinander verbunden sind, daß die erste Folie die noppenartigen Vertiefungen der zweiten Folie verschließt. Die von den noppenartigen Vertiefungen gebildeten Luftkammern verleihen solchen Folien einen guten Schutz der Verpackungsgüter gegenüber mechanischen Einwirkungen bei geringem Eigengewicht und darüber hinaus wärmedämmende Eigenschaften, was bei bestimmten Gütern von besonderem Vorteil ist.

Aus der DE-OS 27 51 203 ist ein Folienverbund bekannt, der aus zwei beabstandeten Folien besteht, zwischen denen eine in der Wärme schäumbare Schicht angeordnet ist. Ferner werden in der US-PS 3,813,279 Verbundfolien als Teppichunterlagen beschrieben, welche mit Schaumstoffen und feuerhemmenden Mitteln gefüllte Kammern enthalten.

Die genannten Materialen haben insgesamt den Nachteil, daß sie nicht erst am Anwendungsort zur vollen Volumenstärke beziehungsweise Schutzstärke verarbeitet werden, sondern bei Spezialfirmen hergestellt und dann erst an die Stellen geliefert werden, an denen die stoßempfindlichen Güter verpackt werden sollen. Dies ist einerseits mit hohen Transportkosten pro Gewichtseinheit Verpackungsstoff (Polyurethanschäume können z.B. ein spezifische Gewicht von nur 6,5 kg/cbm haben) und andererseits mit zum Teil erheblichem maschinellen oder manuellen Aufwand bei der Umhüllung der stoßempfindlichen Güter mit dem Verpackungsstoff verbunden.

Der Erfindung liegt die Aufgabe zugrunde, ein Folienverbund zu entwickeln, bei dem sowohl der Transport als auch
der Verpackungsvorgang ohne besonderen materiellen oder
maschinellen Aufwand durchzuführen ist. Der Folienverbund
sollte ferner eine optimale Anpassung an die Form des zu
umhüllenden beziehungsweise zu verpackenden Gegenstandes
gewährleisten, so daß durch Ausschaltung oder Reduzierung
der Hohlräume zwischen Gegenstand und Verpackungsmittel
ein besserer Schutz gegenüber mechanischen Einwirkungen
erzielt werden kann.

Diese Aufgabe ist erfindungsgemäß dadurch gelöst, daß die
chemischen Stoffe solche Ausganggsstoffe sind, die durch
äußere Einwirkung zum Zeitpunkt der Verwendung am Einsatzort reagieren und das Volumen der Kammern, ggf.
unter deren Auflösung, vergrößern. Unteransprüche 2 bis 8
beschreiben vorteilhafte Ausführungsformen des erfindungsgemäßen Folienverbunds.

Erfindungsgemäß wird die Volumenvergrößerung beispielsweise durch Temperaturerhöhung, Bestrahlung mit Mikrowellen, Lichteinwirkung oder Ausübung eines mechanischen
Drucks auf die Außenseite der Folien herbeigeführt.

Mit einem derartigen Folienverbund werden in vorteilhafter
Weise die Transportkosten für den Folienverbund wesentlich
gesenkt und ein das zu verpackende Gut vollständig umhüllender Formschutz ohne Einsatz von teuern Formwerkzeugen erzielt.

Erfindungsgemäß kann der chemische Stoff je nach Anforderung ein leicht vergasbares Material, z.B. Ammoniumsalze wie Ammoniumcarbonat, Ammoniumhydrogencarbonat,
Ammoniumcarbamid und dgl., oder z.B. ein Polystyrolgranulat sein, das mit Freon, einem leicht vergasbaren Material oder einem sonstigen geeigneten Stoff gefüllt ist, der durch eine äußere Einwirkung zur Volumenvergrößerung gebracht werden kann.

Weiter kann der chemische Stoff aus zwei Komponenten bestehen, die durch Barrieren voneinander getrennt sind, und der erst nach einer Zerstörung der Barrieren oder des Produktes aufgrund einer äußeren Einwirkung aufschäumt. Eine Barriere zwischen den Komponenten kann eine dritte Zwischenfolie bilden oder die Komponenten werden voneinander durch Verkapselung getrennt.

Zu einer weiteren vorteilhaften Ausgestaltung der Erfindung gelangt man, in dem man weiter in den Kammern Hilfsstoffe vorsieht, die zum Aufschäumen des chemischen Stoffs beitragen. Derartige Hilfsstoffe können mit Wasser gesättigte Absorberstoffe, wie Zeolithe, Vanadiumpentoxid oder Silicagel sein, die bei Bestrahlung mit Mikrowellen große Mengen Wasserdampf mit hoher Temperatur abgeben. Dadurch wird eine Erwärmung des aufschäumbaren Materials erreicht, das wegen der Erwärmung aufschäumt und wegen der erhöhten Temperatur vollständig und schnell aufschäumt.

In weiterer vorteilhafter Ausgestaltung der Erfindung ist vorgesehen, daß die chemischen Stoffe mit einem mittels Induktion aufheizbaren Kunststoff versehen sind, wie z.B. einem in den chemischen Stoff dotiertes Metallpulver. Dies ermöglicht in geeigneten Anwendungsfällen eine schnelle und einfache Erwärmung der chemischen Stoffe, um den Vorgang der Volumensvergrößerung auszulösen.

Weiter ist in vorteilhafter Ausgestaltung der Erfindung vorgesehen, daß die Barrieren mittels Strahlung einem hohen mechanischen Druck auf die Außenseiten des Folienverbundes oder Ultraschall zerstörbar sind.

In weiterer vorteilhafter Ausgestaltung ist vorgesehen, daß eine der Folien elektrisch leitfähig ist oder mit elektrisch leitfähigen Materialien beschichtet ist. Eine derartige Anordnung schützt das zu verpackende Gut in vorteilhafter Weise vor einer Erwärmung durch Mikrowellenbestrahlung.

Durch die Maßnahme, daß beide Folien gasundurchlässig bzw. mit einer gasundurchlässigen Beschichtung versehen sind, wird sichergestellt, daß das sich beim Aufschäumvorgang entwickelnde Gas nicht aus dem Folienverbund entweichen kann. Dadurch werden zusätzlich zu eventuell vorhandenen aufschäumbaren Stoffen Luftkissenpolster erzeugt, die eine zusätzliche stoßdämpfende Wirkung der Folie erzeugen.

6

Schließlich ist in vorteilhafter Ausgestaltung der Erfindung vorgesehen, daß der Folienverbund auf der Innenseite eines Verpackungsmittels, z.B. eines Karton angeordnet ist. Diese Maßnahme führt zu einer vorteilhaften und einfachen Verpackung, mit der auf schnelle und billige Weise ein stoßempfindliches Gut sicher verpackt werden kann.

Vorteilhafte Ausgestaltung en) der Erfindung sind in der Zeichnung dargestellt und werden im folgenden näher beschrieben. Es zeigen:

Fig. 1    eine erste Ausführungsform des Folienverbundes;

Fig. 2    eine zweite Ausführungsform des Folienverbundes;

Fig. 3    den Folienverbund im aufgeschäumten Zustand;

Fig. 4    einen mit dem Folienverbund versehenen Karton;

Fig. 5    den in Fig. 4 gezeigten Karton mit dem Folienverbund im aufgeschäumten Zustand.

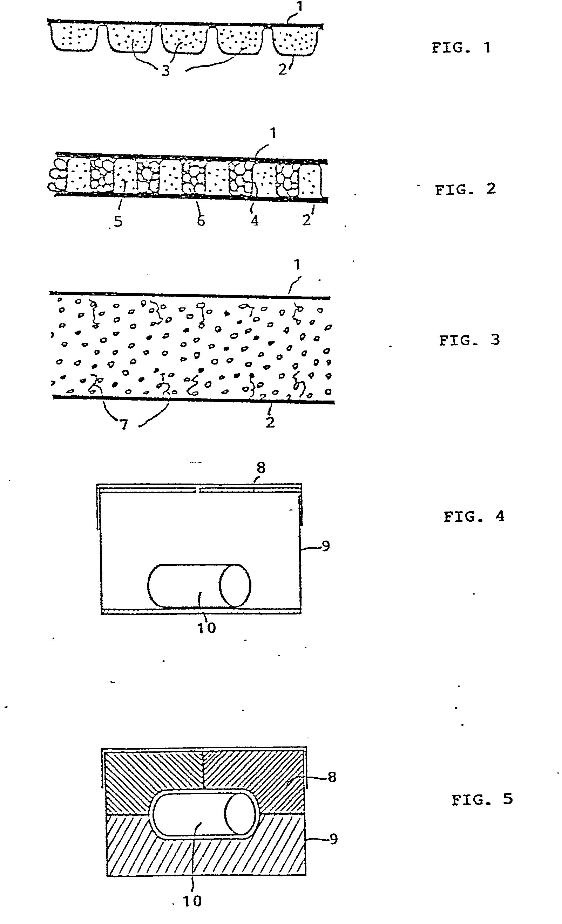

In Fig. 1 ist ein Folienverbund dargestellt, der eine obere Folie 1 und eine dazu beabstandete untere Folie 2 umfaßt, wobei die Folien miteinander zur Ausbildung von Kammern 3 miteinander verbunden sind. In den Kammern 3 ist ein aufschäumbarer oder leicht vergasbarer Stoff, wie z.B. einige Ammoniumsalze, oder Polystyrolgranulat angeordnet, das mit Freon, einigen Ammoniumsalzen oder dergleichen              gefüllt ist und durch äußere Einwirkung zur Volumenvergrößerung gebracht werden kann.

Fig. 2 zeigt eine weitere Ausführungsform der Erfindung, bei der die zwei Folien 1 und 2 beabstandet angeordnet sind und mit einer Zwischenfolie bzw. einer Barriere 4 so miteinander verbunden sind, daß zwischen den Folien 1, 2, Kammern 5, 6 ausgebildet werden. In den Kammern befinden sich unterschiedliche chemische Stoffe, wie z.B. Polyester/Isocyanat, Harnstoff/Formaldehyd, Melamin/Formaldehyd, Phenol/Formaldehyd usw. Die einzelnen Komponenten sind durch die Barrieren getrennt und schäumen erst nach einer Zerstörung der Barrieren 4 aufgrund einer äußeren Einwirkung auf. In Fig. 3 ist ein derartig aufgeschäumter Folienverbund dargestellt, wobei zerstörte Barrieren 7 zu erkennen sind.

Es können weiter in den Kammern 5, 6 Hilfsstoffe vorgesehen sein, die zum Aufschäumen bzw. der Volumensvergrößerung des chemischen Stoffs bzw. der chemischen Stoffe beitragen. Diese Hilfsstoffe können mit Wasser gesättigte Absorberstoffe, wie Zeolith, $V_2O_5$ oder Silicagel sein, die bei Bestrahlung mit Mikrowellen große Mengen an Wasserdampf mit hoher Temperatur abgeben. Die Hilfsstoffe können ebenfalls ein in den chemischen Stoff dotiertes Metallpulver sein, das durch Induktion erwärmt werden kann.

Damit das zu verpackende Gut vor Mikrowellenstrahlung geschützt ist, besteht die Möglichkeit, eine der Folien 1, 2 elektrisch leitfähig auszubilden oder mit einem elektrisch leitfähigen Material zu beschichten.

Die Folien sollen vorzugsweise gasundurchlässig sein oder mit einer gasundurchlässigen Beschichtung versehen sein, damit das sich beim Aufschäumen entwickelnde Gas zusätzlich als Luftkissenpolster eine stoßdämpfende Wirkung hat.

In Fig. 4 und 5 ist ein Ausführungsbeispiel der Erfindung dargestellt, bei dem der Folienverbund 8 auf der Innenseite eines Verpackungskartons 9 angeordnet ist. Zur Verpackung wird der Gegenstand 10 in bekannter Weise in den Karton 9 eingelegt und der Karton darauf z.B. mittels einer Klebfolie verschlossen. Dann wird der Karton z.B. einer Mikrowellenbestrahlung ausgesetzt, wodurch der Aufschäumvorgang ausgelöst wird, so daß der Gegenstand 10 sicher im Karton 9 festgelegt ist (siehe Fig. 5). Man sieht, daß die äußere Einwirkung auf die Folie nach dem Verpackungsvorgang und vor dem Beginn der Schutznotwendigkeit erfolgen kann. Somit erreicht man, daß die Transportkosten für das Verpackungsmaterial wesentlich geringer sind und daß ein das zu verpackende Gut vollständig umhüllender Schaumschutz bzw. Luftkissenpolsterung ohne Einsatz von teuren Formwerkzeugen entsteht.

Weitere Anwendungsgebiete der vorliegenden Erfindung sind z.B. ein mit dem Folienverbund ausgekleideter Briefumschlag, Folienteile zum Auffüllen von Hohlräumen, oder die Herstellung einer Schachtel aus sehr dünner Wellpappe, bzw. aus Kraftpapier, dessen ganze Fläche mit dem Folienverbund kaschiert ist.

Beim externen Auslösen des Aufschäumvorgangs der Folie ist dann eine Vorrichtung erforderlich, die die äußere Form der Verpackung beibehält. Das Grundmaterial (Wellpappe bzw. Kraftpapier kaschiert mit dem Folienverbund) benötigt dann vor dem Aufschäumen nur eine sehr geringe Eigenstabilität. Nach dem Aufschäumen ist die Eigenstabilität durch den Schaum gegeben.

Grundsätzlich kann der Folienverbund überall dort verwendet werden, wo bei den bekannten Verfahren Polyurethanschaumteile, vorgeschäumte Styroporformteile, Luftkissenpolsterfolien, geschäumte Folien, Holzwolle, Styroporflocken oder sonstige stoßabsorbierende Materialien verwendet wurden.

9

Besondere Vorteile ergeben sich dort, wo geringe Stückzahlen empfindlicher Güter verpackt werden müssen, eine
hohe Vielfalt vorgeschäumter Verpackungsformteile benötigt wird, komplizierte Styroporformteile mit entsprechend hohen Werkzeugkosten benötigt werden, sehr unterschiedliche Teile, wie z.B. Ersatzteile, Einzelanfertigungen usw. und Teile unterschiedlicher Form, wie z.B. im
Versandhandel, verpackt werden müssen.

Der erfindungsgemäße Folienverbund hat je nach Typ eine
Folienverbunddicke von ca. 0,5 - 2 mm. Die Volumenvergrößerung beträgt je nach Typ ca. 1 : 2 bis 1 : 80 (d.h.,
eine 1 mm dicke Folie kann nach dem Aufschäumen bis zu 80
mm dick werden).

Weiter kann die Brennbarkeit, d. h. die Entflammbarkeit,
innerhalb der für Kunststoffe im allgemeinen erreichbaren
Werte bei dem erfindungsgemäßen Folienverbund eingestellt
werden.

Ein weiterer wichtiger Vorteil des erfindungsgemäßen Folienverbundes ist die Entsorgung, da der Folienverbund im
kleingeschnittenen Zustand wieder verwendbar ist.

Daneben ist zu beachten, daß der Folienverbund insbesondere in seiner Ausgestaltung mit aufschäumbaren Materialien auch als Wärmedämmmaterial im Baubereich oder Maschinenbau eingesetzt werden kann, vorteilhafterweise
insbesondere dort, wo die Montage anderer Dämmstoffe umständlich ist, z.B. hinter Heizkörpern.

Patentansprüche

1. Folienverbund bestehend aus mindestens zwei, mindestens
   teilweise beabstandeten Folien, die an mehreren Stellen
   zur Bildung von Kammern miteinander verbunden sind, wobei zumindest in einem Teil der Kammern chemische Stoffe
   angeordnet sind, dadurch gekennzeichnet, daß die chemischen Stoffe solche Ausgangsstoffe sind, die durch äußere Einwirkung zum Zeitpunkt der Verwendung am Einsatzort reagieren und das Volumen der Kammern, ggf. unter
   deren Auflösung, vergrößern.

2. Folienverbund nach Anspruch 1, dadurch gekennzeichnet,
   daß der Ausgangsstoff eine leicht vergasbare Verbindung,
   vorzugsweise ein Ammoniumsalz, ist, die sich durch Erwärmung unter Gasentwicklung zersetzt.

3. Folienverbund nach Anspruch 1, dadurch gekennzeichnet,
   daß der Ausgangsstoff ein ein Blähmittel enthaltendes
   Polymeres, vorzugsweise ein Polystyrolgranulat ist, das
   durch Erwärmung aufschäumt.

4. Folienverbund nach Anspruch 1, dadurch gekennzeichnet,
   daß der Ausgangsstoff aus zwei Komponenten besteht, die
   in verschiedenen Kammern angeordnet sind und die erst
   nach einer Zerstörung der Kammerwände aufgrund äußerer
   Einwirkung, wie Erwärmung, Druck oder Ultraschall eine
   Gasentwicklung verursachen oder aufschäumen.

5. Folienverbund nach einem der Ansprüche 1 bis 4, dadurch
   gekennzeichnet, daß weiter in den Kammern Hilfsstoffe,
   wie mit Wasser gesättigte Absorberstoffe, wie Zeolithe,
   Vanadiumpentoxid oder Silicagel, vorgesehen sind, die bei Bestrahlung mit Mikrowellen vergleichsweise große Mengen an Wasserdampf mit hoher Temperatur abgeben,

6. Folienverbund nach einem der Ansprüche 1 bis 4, <u>dadurch gekennzeichnet</u>, daß weiter in den Kammern ein mittels Induktion aufheizbarer Hilfstoff, wie ein den den Ausgangsstoff dotiertes Metallpulver, vorgesehen ist.

7. Folienverbund nach einem der Ansprüche 1 bis 6, <u>dadurch gekennzeichnet</u>, daß eine der Folien (1,2) elektrisch leitfähig ist oder mit elektrisch leitfähigen Materialien teilweise oder ganz beschichtet oder verbunden ist.

8. Verwendung des Folienverbunds nach einem der Ansprüche 1 bis 7, als Verpackungsmittel an Innenflächen von Verpackungsbehältern, z.B. Kartons.

- . -

1/1

FIG. 1

FIG. 2

FIG. 3

FIG. 4

FIG. 5